Europäisches Patentamt

European Patent Office

Office européen des brevets

(19)

(11) EP 0 896 450 A1

## (12) DEMANDE DE BREVET EUROPEEN

(43) Date de publication:
10.02.1999 Bulletin 1999/06

(51) Int Cl.⁶: **H04L 7/04**, H04L 1/24

(21) Numéro de dépôt: 98401973.7

(22) Date de dépôt: 03.08.1998

(84) Etats contractants désignés:
AT BE CH CY DE DK ES FI FR GB GR IE IT LI LU MC NL PT SE
Etats d'extension désignés:
AL LT LV MK RO SI

(30) Priorité: 06.08.1997 FR 9710071

(71) Demandeur: Itis
35769 Saint Grégoire Cedex (FR)

(72) Inventeur: Csomo, Jean-François
75116 Paris (FR)

(74) Mandataire: Ballot, Paul Denis Jacques et al
Cabinet Ballot-Schmit,
7, rue Le Sueur
75116 Paris (FR)

### (54) Dispositif et procédé de synchronisation de séquences pseudo-aléatoires

(57) L'invention concerne les systèmes de transmission numérique dans lesquels les informations sous forme binaire sont transmises selon des séquences pseudo-aléatoires de manière à pouvoir mesurer, à la réception, la qualité de la transmission.

La synchronisation à la réception est obtenue en chargeant le registre à décalage du générateur pseudo-aléatoire (18) par le code contenu dans un registre à décalage (14) qui reçoit les signaux binaires transmis. Ce chargement est effectué chaque fois qu'un compteur d'erreurs (24) atteint une valeur EMAX. Le compteur d'erreurs (24) est remis à zéro, chaque fois que le nombre de signaux binaires reçus atteint une valeur LMAX.

L'invention est applicable aux systèmes de transmission de signaux de télévision numérique.

FIG. UNIQUE

## Description

L'invention concerne les systèmes dans lesquels les informations sous forme binaire peuvent être transmises selon des séquences pseudo-aléatoires et, plus particulièrement dans de tels systèmes, un dispositif et un procédé qui, à la réception des informations transmises, permet la synchronisation sur des séquences pseudo-aléatoires reçues.

Dans les systèmes de transmission d'informations qui sont sous la forme de signaux binaires, il est courant de transmettre des séquences pseudo-aléatoires qui sont générées à l'émission par un générateur pseudo-aléatoire prévu à cet effet.

Dans le récepteur des signaux binaires, il est prévu de détecter les erreurs en comparant les séquences de signaux binaires reçus aux séquences pseudo-aléatoires fournies par un générateur pseudo-aléatoire identique à celui utilisé à l'émission. Le nombre d'erreurs détectées est une mesure de la qualité de la transmission. Une telle comparaison n'est valable que si les séquences pseudo-aléatoires générées à la réception sont synchronisées avec les séquences reçues et il est donc nécessaire de prévoir un dispositif de synchronisation à la réception.

Les dispositifs de synchronisation qui sont connus présentent l'inconvénient d'être complexes et coûteux.

Aussi, le but de la présente invention est de réaliser un dispositif de synchronisation de séquences pseudo-aléatoires qui est simple tout en permettant une synchronisation rapide.

L'invention concerne un dispositif de synchronisation de séquences pseudo-aléatoires, caractérisé en ce qu'il comprend :

- un registre à décalage auquel sont appliquées les séquences binaires qui sont reçues d'un émetteur distant,
- un générateur qui fournit des séquences pseudo-aléatoires binaires identiques à celles des séquences binaires émises par l'émetteur distant,
- un premier comparateur pour comparer les séquences binaires reçues à celles fournies par ledit générateur et fournir un signal d'erreur chaque fois qu'il n'y a pas identité,
- un premier compteur pour compter les signaux d'erreur fournis par ledit premier comparateur et pour fournir un premier signal chaque fois qu'il a atteint un premier nombre EMAX, ledit premier signal effectuant le transfert dans le générateur du mot binaire contenu dans le registre à décalage, et
- un deuxième compteur pour compter les signaux binaires reçus et pour fournir un deuxième signal chaque fois qu'il a atteint un deuxième nombre LMAX, ledit deuxième signal remettant à zéro lesdits premier et deuxième compteurs.

Les nombres binaires EMAX et LMAX sont déterminés en fonction du taux d'erreurs maximal envisagé pour la transmission. Les nombres binaires EMAX et LMAX peuvent être fixes ou ajustables et, dans ce dernier cas, ils sont comparés dans des comparateurs aux nombres binaires contenus dans les premier et deuxième compteurs.

L'invention concerne également, dans un récepteur de signaux binaires, un procédé de synchronisation de séquences pseudo-aléatoires reçues d'un émetteur distant qui comprend les étapes suivantes consistant à :

- appliquer à un registre à décalage les séquences binaires qui sont reçues d'un émetteur distant,
- générer dans un générateur des séquences pseudo-aléatoires binaires identiques à celles des séquences binaires émises par l'émetteur distant,
- comparer les séquences binaires reçues aux séquences pseudo-aléatoires binaires générées pour fournir un signal d'erreur chaque fois qu'il n'y a pas identité,
- compter dans un premier compteur les signaux d'erreurs pour fournir un signal lorsque le nombre d'erreurs a atteint une valeur EMAX,
- transférer le contenu du registre à décalage dans le générateur lorsque la valeur EMAX est atteinte,
- compter dans un deuxième compteur les signaux binaires reçus pour fournir un signal de remise à zéro à intervalles réguliers des premier et deuxième compteurs.

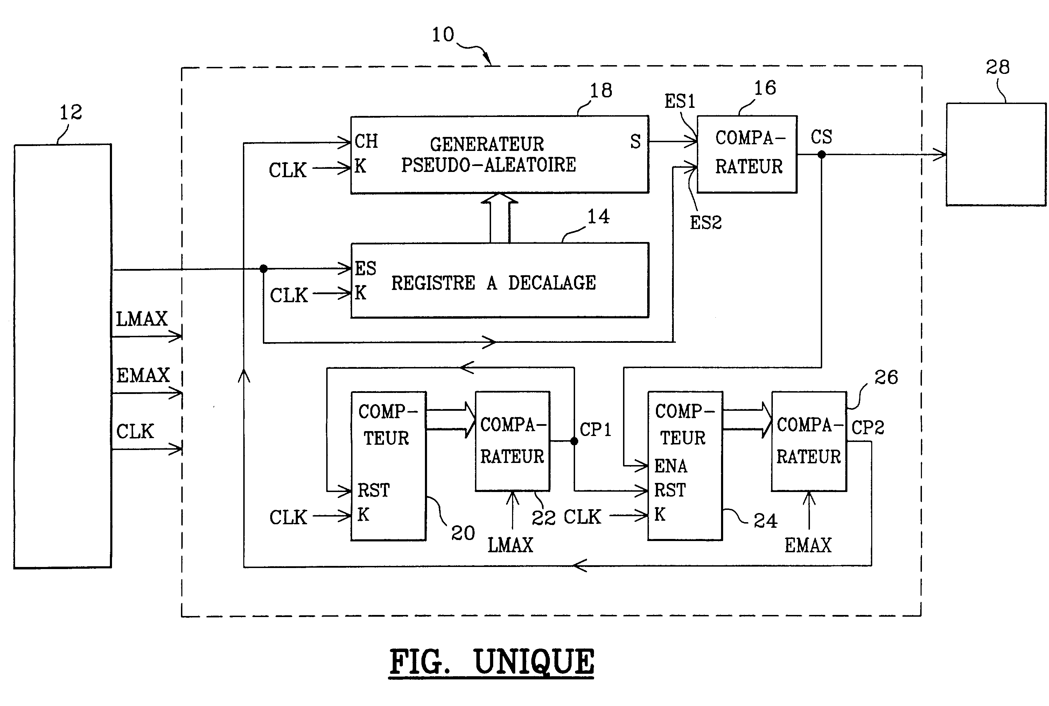

D'autres caractéristiques et avantages de la présente invention apparaîtront à la lecture de la description suivante d'un exemple particulier de réalisation, ladite description étant faite en relation avec le dessin joint dans lequel :

- la figure unique est un schéma fonctionnel d'un dispositif de synchronisation de séquences pseudo-aléatoires binaires et de détection d'erreurs dans de telles séquences selon l'invention.

Lors d'une transmission de signaux binaires, l'émetteur est généralement supposé délivrer des éléments binaires indépendants. Pour évaluer les performances théoriques d'une transmission par une méthode de simulation, ou pour en mesurer les performances pratiques, on doit engendrer une suite d'éléments binaires ayant des propriétés d'autocorrélation proches de celles d'une séquence aléatoire correspondant à des éléments binaires indépendants. C'est le cas des séquences pseudo-aléatoires qui s'obtiennent de façon simple à l'aide d'un générateur comprenant essentiellement un registre à décalage et des additionneurs modulo-2.

De telles séquences pseudo-aléatoires et la manière de les obtenir sont décrites dans l'ouvrage intitulé : "Eléments de communications numériques" de J.C. BIC, D. DUPONTEIL, J.C. IMBEAUX, édité par DUNOD-BORDAS CNET-ENST en 1986 ,pages 279 à 283.

Ainsi, à l'émission, les éléments binaires sont émis suivant une séquence pseudo-aléatoire qui est définie par un polynôme primitif h(x) de degré m tel que :

$$h(x) : \sum_{j=0}^{m} h_j x^j$$

avec $h_0 = h_m = 1$ et $h_j = 0$ ou 1 pour $j = 1 \dots m-1$.

Cette séquence pseudo-aléatoire est une suite d'éléments binaires $a_i$ vérifiant la relation de récurrence :

$$\sum_{j=0}^{m} h_j a_{i+j} = 0$$

A la réception, par un récepteur 12, les signaux émis par l'émetteur sont détectés, amplifiés, démodulés de manière à obtenir une suite d'éléments binaires qui, si la transmission a été parfaite, c'est-à-dire sans erreur, reproduit la séquence pseudo-aléatoire émise. Pour déterminer l'absence ou non d'erreur, il suffit de comparer la suite d'éléments binaires reçus à des séquences pseudo-aléatoires définies par un polynôme primitif identique à celui mis en oeuvre dans le générateur utilisé à l'émission.

A cet effet, la suite des signaux binaires S2 fournis par le récepteur 12 est appliquée à une borne d'entrée ES2 d'un premier comparateur 16 dont l'autre entrée ES1 reçoit une suite de signaux binaires S1 fournie par la borne de sortie S d'un générateur 18 de séquences pseudo-aléatoires. Le générateur 18, comprend, conformément à ce qui est décrit dans l'ouvrage précité, un registre à décalage à m étages et (m-1) additionneurs modulo-2 qui agissent chacun sur une borne de sortie d'un étage et sur une borne d'entrée du précédent, sauf en ce qui concerne le premier et le dernier étage.

La borne de sortie CS du premier comparateur 16 fournit un signal chaque fois que les signaux binaires comparés ne sont pas identiques. Cette borne de sortie CS est connectée, d'une part, à une borne d'entrée d'un dispositif 28 qui effectue des mesures statistiques des erreurs détectées et, d'autre part, à une borne d'entrée ENA d'un premier compteur 24, appelé compteur d'erreurs.

Pour que la comparaison effectuée par le premier comparateur 16 soit valable, il est nécessaire que les deux suites de signaux binaires S1 et S2 soient synchronisées. Cette synchronisation est obtenue selon l'invention en chargeant simultanément les m étages du registre à décalage du générateur 18 par les m chiffres binaires d'un registre à décalage 14 dont l'une des bornes d'entrée ES reçoit la suite des signaux binaires reçus S2. Ce chargement est commandé par un signal appliqué à l'une des bornes d'entrée CH du générateur 18.

L'autre borne d'entrée K du générateur 18 et du registre à décalage 14 reçoivent un signal d'horloge CLK fournie par le récepteur 12, signal d'horloge dont la fréquence est celle des signaux binaires de la suite S2. Le signal d'horloge CLK est également appliqué au dispositif 28.

Le signal de chargement du générateur 18 est fourni par le premier compteur 24 lorsqu'il atteint un certain nombre EMAX. Ce nombre EMAX peut être fixe, auquel cas il est détecté par un circuit de décodage non représenté, ou variable, auquel cas il est détecté par un premier comparateur 26 qui reçoit, d'une part, le nombre EMAX fourni par le récepteur 12 et, d'autre part, les signaux des chiffres binaires du compteur 24. Chaque fois que le nombre EMAX est atteint, le comparateur 26 fournit sur sa borne de sortie CP2 un signal de chargement du générateur 18 par le code à m chiffres contenu par le registre à décalage 14.

La fréquence de ce chargement dépend du nombre EMAX et de la fréquence des erreurs, fréquence qui est élevée en l'absence de synchronisation de sorte que le générateur 18 est souvent ré-initialisé en cas de désynchronisation, ce qui permet d'aboutir à une synchronisation d'autant plus rapide que EMAX est petit.

Lorsque la synchronisation a été obtenue et selon la qualité de la transmission, des erreurs sont détectées par le comparateur 16, ce qui augmente le contenu du compteur 24. Ce dernier atteindra la valeur EMAX, ce qui provoquera un transfert du registre à décalage 14 vers le générateur pseudo-aléatoire 18 alors qu'il y a synchronisation.

Aussi, pour éviter un tel transfert inutile qui pourrait perturber la synchronisation acquise, l'invention prévoit la remise à zéro du compteur d'erreurs 24 après un certain temps LMAX défini par un deuxième compteur 20 qui compte les signaux d'horloge CLK appliqués à sa borne d'entrée K, la fréquence des signaux d'horloge CLK correspondant à la fréquence des signaux binaires reçus.

Par cette remise à zéro, le compteur d'erreurs recommence un cycle de comptage avant d'atteindre EMAX, valeur EMAX qui a été choisie pour qu'elle ne soit pas atteinte après une durée de comptage LMAX lorsque le taux d'erreur est inférieur à un certain seuil, par exemple un pour-cent.

Cette durée de comptage ou fenêtre temporelle LMAX peut être fixe, auquel cas elle est détectée par un circuit de décodage non représenté, ou variable, auquel cas elle est détectée par un deuxième comparateur 22 qui reçoit, d'une part, le nombre binaire LMAX fourni par le récepteur 12 et, d'autre part, les signaux des chiffres binaires du compteur 20.

Chaque fois que le nombre LMAX est atteint, le comparateur 22 fournit sur sa borne de sortie CP1 un signal de remise à zéro des premier et deuxième compteurs 24, 20 qui est appliqué à la borne d'entrée RST de ces compteurs.

Les valeurs de EMAX et LMAX sont déterminées en fonction d'un certain nombre de critères dont le principal est le taux d'erreurs maximal de la transmission qui est envisagé. Elles sont ajustées pour optimiser le temps de synchronisation et pour s'adapter aux différents taux d'erreurs de transmission.

A titre indicatif, pour un code pseudo-aléatoire à m = 23 bits et un taux d'erreurs maximal de 10 %, la valeur de EMAX a été choisie à 256, et la valeur de LMAX a été choisie à 1024.

Le dispositif qui vient d'être décrit en relation avec la figure unique permet de définir un procédé de synchronisation de séquences pseudo-aléatoires reçues d'un émetteur distant qui comprend les étapes suivantes consistant à :

- appliquer à un registre à décalage 14 les séquences binaires qui sont reçues d'un émetteur distant,
- générer dans un générateur 18 des séquences pseudo-aléatoires binaires identiques à celles des séquences binaires émises par l'émetteur distant,
- comparer les séquences binaires reçues aux séquences pseudo-aléatoires binaires générées pour fournir un signal d'erreur chaque fois qu'il n'y a pas identité,
- compter dans un premier compteur 24 les signaux d'erreurs pour fournir un signal lorsque le nombre d'erreurs a atteint une valeur EMAX,
- transférer le contenu du registre à décalage 14 dans le générateur 18 lorsque la valeur EMAX est atteinte,
- compter dans un deuxième compteur 20 les signaux binaires reçus pour fournir un signal de remise à zéro à intervalles réguliers des premier et deuxième compteurs.

## Revendications

1. Dispositif de synchronisation de séquences pseudo-aléatoires, caractérisé en ce qu'il comprend :

- un registre à décalage (14) auquel sont appliquées les séquences binaires qui sont reçues d'un émetteur distant,
- un générateur (18) qui fournit des séquences pseudo-aléatoires binaires identiques à celles des séquences binaires émises par l'émetteur distant,
- un premier comparateur (16) pour comparer les séquences binaires reçues à celles fournies par ledit générateur et fournir un signal d'erreur chaque fois qu'il n'y a pas identité,
- un premier compteur (24) pour compter les signaux d'erreur fournis par ledit premier comparateur (16) et pour fournir un premier signal chaque fois qu'il a atteint un premier nombre (EMAX), ledit premier signal effectuant le transfert dans le générateur (18) du mot binaire contenu dans le registre à décalage (14), et
- un deuxième compteur (20) pour compter les signaux d'horloge (CLK) et pour fournir un deuxième signal chaque fois qu'il a atteint un deuxième nombre (LMAX), ledit deuxième signal remettant à zéro lesdits premier et deuxième compteurs (24, 20).

2. Dispositif selon la revendication 1, caractérisé en ce que les valeurs de EMAX et LMAX sont déterminées en fonction du taux d'erreurs maximal envisagé pour la transmission.

3. Dispositif selon la revendication 1 ou 2, caractérisé en ce que les valeurs de EMAX et LMAX sont fixes et sont détectées par un circuit de décodage.

4. Dispositif selon la revendication 1 ou 2, caractérisé en ce que les valeurs de EMAX et LMAX sont ajustables et sont détectées par un comparateur (26, 22) qui reçoit, d'une part, le nombre EMAX ou LMAX et, d'autre part, le nombre affiché par le premier ou le deuxième compteur (24, 20).

5. Procédé de synchronisation de séquences pseudo-aléatoires reçues d'un émetteur distant qui comprend les étapes suivantes consistant à :

- appliquer à un registre à décalage (14) les séquences binaires qui sont reçues d'un émetteur distant,
- générer dans un générateur (18) des séquences pseudo-aléatoires binaires identiques à celles des séquences binaires émises par l'émetteur distant,
- comparer les séquences binaires reçues aux séquences pseudo-aléatoires binaires générées pour fournir un signal d'erreur chaque fois qu'il n'y a pas identité,
- compter dans un premier compteur (24) les signaux d'erreurs pour fournir un signal lorsque le nombre d'erreurs a atteint une valeur EMAX,
- transférer le contenu du registre à décalage (14) dans le générateur (18) lorsque la valeur EMAX est atteinte,
- compter dans un deuxième compteur (20) les signaux binaires reçus pour fournir un signal de remise à zéro à intervalles réguliers des premier et deuxième compteurs.

EP 0 896 450 A1

GENERATEUR PSEUDO-ALEATOIRE

CH

CLK → K

S

ES1

COMPA-RATEUR

CS

ES2

REGISTRE A DECALAGE

ES

CLK → K

LMAX

EMAX

CLK

COMP-TEUR

RST

CLK → K

COMPA-RATEUR

CP1

LMAX

COMP-TEUR

ENA

RST

CLK → K

COMPA-RATEUR

CP2

EMAX

**FIG. UNIQUE**

EP 0 896 450 A1

**Office européen des brevets**  **RAPPORT DE RECHERCHE EUROPEENNE**  Numéro de la demande  EP 98 40 1973

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WARD ROBERT B: "ACQUISITION OF PSEUDONOISE SIGNALS BY SEQUENTIAL ESTIMATION" IEEE TRANSACTIONS ON COMMUNICATION TECHNOLOGY, vol. COM-13, no. 4, décembre 1965, pages 475-483, XP002062519 * page 475, colonne 1, ligne 1 - page 477, colonne 1, ligne 26 * | 1-5 | H04L7/04 H04L1/24 |
| A | WARD ROBERT B ET AL: "ACQUISITION OF PSEUDONOISE BY RECURSION-AIDED SEQUENTIAL ESTIMATION" IEEE TRANSACTIONS ON COMMUNICATIONS, vol. COM-25, no. 8, août 1977, pages 784-794, XP002062520 * page 784, colonne 1 - page 785, colonne 1, ligne 38 * | 1-5 | |
| A | KILGUS CHARLES C ET AL: "PSEUDO-NOISE CODE ACQUISITION USING MAJORITY LOGIC DECODING" IEEE INTERNATIONAL CONFERENCE ON TELECOMMUNICATIONS,juin 1973, pages 23-16-23-17, XP002062521 SEATTLE, USA * Introduction * | 1-5 | DOMAINES TECHNIQUES RECHERCHES (Int.Cl.6) H04L |
| A | EP 0 370 291 A (TELETTRA LAB TELEFON) 30 mai 1990 * abrégé * * colonne 5, ligne 22 - colonne 6, ligne 18 * * colonne 7, ligne 46 - ligne 50 * | 1-5 | |

-/--

Le présent rapport a été établi pour toutes les revendications

| Lieu de la recherche | Date d'achèvement de la recherche | Examinateur |
|---|---|---|
| LA HAYE | 9 novembre 1998 | Chauvet, C |

Office européen
des brevets

**RAPPORT DE RECHERCHE EUROPEENNE**

Numéro de la demande

EP 98 40 1973

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DODDS D E ET AL: "SPREAD SPECTRUM CODEPHASE ACQUISITION USING A CYCLIC ACCUMULATION MATCHED FILTER" PROCEEDINGS OF THE GLOBAL TELECOMMUNICATIONS CONFERENCE (GLOBECOM), SAN FRANCISCO, NOV. 28 - DEC. 2, 1994, vol. VOL. 2, 28 novembre 1994, pages 979-983, XP000488683 INSTITUTE OF ELECTRICAL AND ELECTRONICS ENGINEERS * page 979, colonne 2, ligne 9 - page 980, colonne 1, ligne 22 * | 1-5 | |
| | | | **DOMAINES TECHNIQUES RECHERCHES** (Int.Cl.6) |

Le présent rapport a été établi pour toutes les revendications

| Lieu de la recherche | Date d'achèvement de la recherche | Examinateur |
|---|---|---|
| LA HAYE | 9 novembre 1998 | Chauvet, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)